# EUROPÄISCHE PATENTSCHRIFT

(11) **EP 3 709 463 B1**
(45) Veröffentlichungstag und Bekanntmachung des Hinweises auf die Patenterteilung: **08.11.2023**
(21) Anmeldenummer: 19161939.4
(22) Anmeldetag: 11.03.2019
(51) Int. Cl.: H02G 3/22

(54) **BRANDSCHOTTUNG UND VERFAHREN ZUM HERSTELLEN DER RAUCHDICHTEN BRANDSCHOTTUNG MIT MECHANISCHER BEANSPRUCHUNG IM BRANDFALL**
FIRE BULKHEAD AND METHOD FOR PRODUCING THE SMOKEPROOF FIRE BULKHEAD WITH MECHANICAL STRESS IN CASE OF FIRE
COUPE-FEU ET PROCÉDÉ DE FABRICATION DE COUPE-FEU ÉTANCHE À LA FUMÉE À SOLLICITATION MÉCANIQUE EN CAS D'INCENDIE

(43) Veröffentlichungstag der Anmeldung: 16.09.2020
(73) Patentinhaber: Siemens Energy Global GmbH & Co. KG, 81739 München (DE)
(72) Erfinder: Gemer, Michael, 90419 Nürnberg (DE); Vogt, Ferdinand, 91052 Erlangen (DE)

(56) Entgegenhaltungen:
- EP-A2- 2 604 899
- US-A1- 2017 194 779

## Beschreibung

### GEBIET DER ERFINDUNG

Die vorliegende Erfindung betrifft ein Verfahren eines brandfesten bzw. rauchfesten Verschließens einer Wandöffnung in einer Brandwand, wobei durch die Wandöffnung eine Hochspannungselektroleitung geführt ist, um somit eine Brandschottung herzustellen und betrifft ferner eine Vorrichtung zum brandfesten Verschließen einer Wandöffnung, durch die ein Hochspannungselektroleitung geführt ist, wobei die Vorrichtung auch als Brandschottung bezeichnet wird.

### HINTERGRUND

Transformatoreinrichtungen, welche im Hochspannungs- und/oder Hochstrombetrieb arbeiten, umfassen eine erhebliche Menge an brennbarem Material, wie etwa Öl, was insbesondere zur Kühlung verwendet wird. Beim Betreiben eines Transformators im Hochstrom- bzw. Hochspannungsbereich besteht somit erhöhte Brandgefahr. Transformatorstände können z.B. in Umspannwerken eingesetzt werden, um z.B. Mittelspannung in Hochspannung zu transformieren. Insbesondere kann eine Hochspannungselektroleitung, die mit einem Eingang oder Ausgang eines Transformators verbunden ist, zu einer Konverter-Halle führen, in welcher ein oder mehrere Leistungskonverter angeordnet sind, um Wechselstrom z.B. in Gleichstrom umzuwandeln. Eine sogenannte Transformator-Durchführung kann z.B. von einem Eingang oder Ausgang eines Transformators in eine Halle mit Konvertern hinein führen und innerhalb der Konverterhalle mit einem oder mehreren Konvertern verbunden sein.

Wegen der Brandgefahr des Transformators müssen gemäß gesetzlichen Bestimmungen große Brandschotts um die elektrischen Transformator-Durchführungen vorhanden sein. Diese müssen für eine geforderte Zeit der Brandbeständigkeit (in Deutschland z.B. mindestens die Brandschutzklasse El 90/F-90 (90 Minuten)) erreichen. Diese Brandschotts müssen somit zumindest für 90 min einem Brand mit gewissen Mindesttemperaturen widerstehen können.

Eine Transformator-Durchführung kann einen relativ großen Durchmesser aufweisen, was ein effektives Abschotten gegen Brand und hohe Temperaturen erschweren kann. Ferner kann eine absolute Rauchdichtigkeit während eines fiktiven Transformator-Brandes außerhalb einer Konverterhalle gefordert sein, was herkömmlicherweise schwierig realisiert wird. Falls jedoch eine Rauchdichtigkeit gewährleistet werden könnte, könnte in den Konverterhallen auf Rauchschutz/Abführungsmaßnahmen wie Rauch- und Wärme-Abzüge und/oder Rauchschutz verzichtet werden. Im Falle des fiktiven Transformator-Brandes kann sich die Transformator-Durchführung aufgrund der großen Hitzeentwicklung verformen, insbesondere durchbiegen und kann so eine zerstörerische Kraft (= mechanische Beanspruchung) im Bereich der Brandschottöffnung für die Transformator-Durchführung bedeuten.

Herkömmlicherweise kann eine Transformator-Durchführung durch eine Öffnung in der Konverter-Hallenwand geführt werden. Herkömmliche Brandschotts bzw. Vorrichtungen zum brand- und/oder rauchfesten Verschließen einer Wandöffnung sind jedoch nicht in allen Situationen zuverlässig, so dass das Risiko verbleibt, dass aufgrund eines Brandes Rauch in eine Konverter-Halle eindringt, was zur Beschädigung der relativ empfindlichen Konverter-Einrichtungen führen kann.

In der EP 2 604 899 A2 ist ein mehrteiliger, im Wesentlichen plattenartiger Modulrahmen zur Montage einer Leitungsdurchführung an einem Bauteil offenbart.

Somit ist es eine Aufgabe der vorliegenden Erfindung, ein Verfahren bzw. eine Vorrichtung zum brandfesten Verschließen einer Wandöffnung in einer Wand, durch welche Wandöffnung eine Hochspannungselektroleitung geführt ist, zu schaffen, das bzw. die eine zuverlässige Brandschottung gewährleistet und insbesondere auch für Brandsituationen ausgelegt ist, bei denen sich die Hochspannungselektroleitung bzw. die Transformator-Durchführung aufgrund erhöhter Hitzeentwicklung zu verformen oder zu verbiegen droht, somit das Brandschott mechanisch bis zur Zerstörung beanspruchen könnte.

### ZUSAMMENFASSUNG DER ERFINDUNG

Gemäß einer Ausführungsform der vorliegenden Erfindung ist bereitgestellt ein Verfahren eines brandfesten Verschließens (und somit Herstellens einer Brandschottung) einer Wandöffnung in einer Wand, durch welche Wandöffnung eine Hochspannungselektroleitung geführt ist, insbesondere für den Fall eines Brandes auf einer zweiten Seite der Wand, wobei das Verfahren aufweist: Montieren eines, insbesondere rechteckigen, Rahmens an der umlaufenden Laibung der Wandöffnung; Montieren mindestens einer ersten Metallplatte (z.B. Durasteel) mit einer ersten Aussparung für einen Teil der Hochspannungselektroleitung und Montieren mindestens einer weiteren ersten Metallplatte (z.B. Durasteel) mit einer weiteren ersten Aussparung für einen weiteren Teil der Hochspannungselektroleitung auf einer ersten Stirnfläche des Rahmens, die insbesondere zu einer der zweiten Seite gegenüberliegenden ersten Seite der Wand hin gewandt ist, derart, dass ein freier Durchgang durch den Rahmen im Wesentlichen abgedeckt ist; und Montieren einer Stütze (z.B. T-förmig, für die mechanische Beanspruchung bemessen) für die Hochspannungselektroleitung an der umlaufenden Laibung.

Durch das Verfahren kann somit eine Brandschottung für den Lastfall "mechanische Beanspruchung" hergestellt werden. Die Brandschottung kann brandfest und/oder rauchfest ausgebildet sein. Die Brandschottung kann z.B. für mindestens 90 min. Temperaturen zwischen 1000 °C und 1500 °C widerstehen und kann auch ein Durchdringen von Rauch in einer derartigen Brandsituation verhindern. Die Brandschottung kann insbesondere für den Fall diese Brandschottungseigenschaften aufweisen, bei denen ein Brand auf einer zweiten Seite der Wand auftritt. Auf der zweiten Seite der Wand kann z.B. ein Transformator angeordnet sein. Auf der ersten Seite der Wand können ein oder mehrere Konverter z.B. angeordnet sein, insbesondere innerhalb einer Konverterhalle, wobei die Wand Teil einer Konverterhallenwand ist.

Zu Beginn des Verfahrens kann bereits die Hochspannungselektroleitung (z.B. als Transformator-Durchführung ausgebildet) bereits durch die Wandöffnung hindurch von der ersten Seite der Wand zu der zweiten Seite der Wand hinüberreichen. Innerhalb der Wandöffnung und um die Hochspannungselektroleitung herum wird die Brandschottung gemäß dem beanspruchten Verfahren erstellt.

Die Wandöffnung kann insbesondere eine rechteckige Form aufweisen, die z.B. durch zwei vertikale parallele Laibungsbereiche und zwei horizontale parallele Laibungsbereiche begrenzt ist. Die Laibung der Wandöffnung ist die innere der Wandöffnung zugewandte Oberfläche der grenzenden Wand. Die Laibung kann verschiedene Laibungsbereiche aufweisen, z.B. zwei sich gegenüberliegende horizontale Laibungsbereiche und zwei sich gegenüberliegende vertikale Laibungsbereiche. Die Laibungsbereiche können dabei senkrecht zu Hauptausdehungsebenen der Wand ausgerichtet sein.

Der Rahmen kann umlaufend um die Laibung ausgebildet sein. Der Rahmen kann somit ringförmig geschlossen sein. Der Rahmen kann z.B. an der Laibung verdübelt sein mit Hilfe von Schrauben und von Dübeln, welche in der Laibung versenkt sind. Dabei können brandfeste Dübel und Schrauben verwendet werden. Im Querschnitt kann der Rahmen (oder den Rahmen bildende Balken) z.B. eine Rechteckform oder quadratische Form aufweisen. Der Rahmen kann aus Metall, insbesondere Stahl gefertigt sein. Der Rahmen kann genau auf die Größe der Wandöffnung abgestimmt sein. Der Rahmen kann z.B. zwei vertikal verlaufende Balken und zwei horizontal verlaufende Balken aufweisen, die jeweils an Enden miteinander verschweißt oder verschraubt sind. Alternativ kann der Rahmen zwei horizontal verlaufende Balken und zwei vertikal verlaufende Balken aufweisen, welche nicht miteinander verbunden sind, sondern z.B. nur aneinandergrenzen oder aneinanderstoßen.

Innerhalb der Rahmenkonstruktion können Mineralwolle-Platten (z.B. Schmelzpunkt > 1000 °C) eingebaut werden. Alternativ können hochwertige, nichtbrennbare Brandschutzplatten wie PROMATECT auf den Rahmen vor dem Schließen mit den Durasteelplatten aufgebracht werden.

Die erste Metallplatte sowie die weitere erste Metallplatte können mit dem Rahmen oder weiteren Balken eines Balkenwerkes, welche mit dem Rahmen verbunden sind, verschraubt bzw. verbunden sein. Die erste Aussparung kann z.B. eine im Wesentlichen halbkreisförmige Aussparung aufweisen und die weitere erste Aussparung kann ebenfalls eine z.B. spiegelbildliche halbkreisförmige Aussparung aufweisen, für den Fall, dass die Hochspannungselektroleitung eine kreisförmige Querschnittsform hat. Die Hochspannungselektroleitung kann z.B. einen Durchmesser von zwischen 30 cm und 70 cm, insbesondere zwischen 40 cm und 50 cm aufweisen.

(Innere) Kanten der ersten Metallplatte und der weiteren ersten Metallplatte können sich z.B. nach dem Montieren beider Metallplatten berühren oder lediglich einen geringen Spalt zwischen sich aufweisen. Eine Form der ersten Aussparung kann im Wesentlichen einem Teil einer Querschnittsform der Hochspannungselektroleitung entsprechen.

Zusätzlich zu der ersten Metallplatte und der weiteren ersten Metallplatte können mehrere weitere (erste) Metallplatten oberhalb und/oder unterhalb der ersten Metallplatte und/oder der weiteren ersten Metallplatte auf dem Rahmen bzw. einem Balkenwerk innerhalb des Rahmens montiert werden, um dadurch den freien Durchgang durch den Rahmen (und ein etwaig vorhandenes Balkenwerk) im Wesentlichen zu blockieren bzw. zu versperren. In einer Ausführungsform der vorliegenden Erfindung können jedoch die erste Metallplatte und die weitere erste Metallplatte ausreichen, um nach Montage den freien Durchgang durch den Rahmen im Wesentlichen auszufüllen bzw. abzudecken.

Die Stütze, z.B. T-förmig, für die Hochspannungselektroleitung ist zusätzlich zu dem Rahmen und den Metallplatten vorgesehen, um eine ausreichende Abstützung der Hochspannungselektroleitung bereitzustellen, im Falle, dass aufgrund einer hohen Temperatur die Hochspannungselektroleitung oder die erste Metallplatte und/oder die weitere erste Metallplatte einer Verformung unterliegen. Die Stütze kann derart dimensioniert sein, dass sie eine vorbestimmte Last aufnehmen kann, welche im Falle einer hohen Temperaturentwicklung aufgrund einer Deformation der Hochspannungselektroleitung und anderer Komponenten, eintreten könnte oder zu erwarten ist. Die Stütze kann ein Element verschieden und ursprünglich getrennt von der ersten Metallplatte und der weiteren ersten Metallplatte sein. Die Stütze kann eine Form unterschiedlich von einer Plattenform aufweisen.

Die Befestigung der Stütze kann im Beton mit zugelassenen Dübeln erfolgen, die die geforderte Brandbeständigkeit gewährleisten.

Die erste Metallplatte und die weitere erste Metallplatte können lediglich an dem Rahmen bzw. an dem Balkenwerk montiert sein, ohne dass sie zusätzlich an der Laibung angebracht sind. Im Gegensatz dazu ist die Stütze jedenfalls an der Laibung angebracht, optional auch an dem Rahmen bzw. an einer oder mehreren Metallplatten, welche auf dem Rahmen montiert sein können. Wenn die Stütze an der Laibung montiert ist, kann die Stütze für eine höhere Belastbarkeit ausgelegt sein. Die Stütze kann verschiedene Formen aufweisen und kann selbst aus einem oder mehreren Elementen gebildet sein.

Vorzugsweise umfasst die Stütze zumindest einen vertikal verlaufenden Balken, welcher insbesondere mittig unterhalb der Hochspannungselektroleitung montiert ist. Die Stütze bzw. eine obere Kante der Stütze muss nicht notwendigerweise direkt mit einer unteren Kante der Hochspannungselektroleitung in unmittelbarem Kontakt stehen. Vielmehr kann bzw. können zwischen einer oberen Kante der Stütze und einer unteren Oberfläche der Hochspannungselektroleitung ein oder mehrere Elemente, insbesondere ein Auflager, vorgesehen sein, wobei sich das Auflager an der Stütze nach unten abstützt und wobei die Hochspannungselektroleitung oben auf dem Auflager aufliegen kann.

Das Verfahren kann bei dem Ort der Wandöffnung durchgeführt werden, wobei die erforderlichen Elemente individuell je nach Größe und Form der Wandöffnung und je nach Position und Orientierung der Hochspannungselektroleitungen durch die Wandöffnung hergestellt bzw. zugeschnitten werden.

Die Stütze kann vorteilhafterweise die Hochspannungselektroleitung in einer Situation abstützen, in der die Hochspannungselektroleitung oder andere Komponenten aufgrund von hoher Temperatur zu verformen drohen. Die Stütze kann auf einer dem Brand abgewandten ersten Seite der Wand angeordnet sein, so dass sie auch durch die erste Metallplatte und die weitere erste Metallplatte effektiv vor Auswirkungen des Brandes auf der zweiten Seite abgeschirmt ist und daher einer Beschädigung oder Verformung bzw. Zerstörung nicht mit dem hohen Risiko ausgesetzt ist, wie sie auf der zweiten Seite ausgesetzt wäre.

Gemäß einer Ausführungsform der vorliegenden Erfindung weist das Verfahren ferner auf Einbringen von Mineralwolle in den Rahmen in Kontakt mit der ersten Metallplatte und der weiteren ersten Metallplatte; und/oder Aufbringen einer Trennlage auf den Rahmen und/oder die erste Metallplatte und/oder die weitere erste Metallplatte.

Die Mineralwolle kann eine effektive Temperaturisolierung bereitstellen, so dass auf der ersten Seite der Wand, welche abgewandt von einer etwaigen Brandseite (der zweiten Seite) ist, weniger zerstörerische Auswirkungen der hohen Hitzeentwicklung auf der Brandseite (der zweiten Seite) befürchtet werden muss. Auch eine Trennlage kann eine erhöhte Wärmeisolation bewirken.

Gemäß einer Ausführungsform der vorliegenden Erfindung weist das Verfahren ferner auf Montieren mindestens einer zweiten Metallplatte, insbesondere spiegelbildlich zur ersten Metallplatte, mit einer zweiten Aussparung, und Montieren mindestens einer weiteren zweiten Metallplatte, insbesondere spiegelbildlich zur weiteren ersten Metallplatte, mit einer weiteren zweiten Aussparung auf einer zweiten Stirnfläche des Rahmens, die insbesondere zu der zweiten Seite der Wand hin gewandt ist.

Somit kann die Brandschottung eine Doppelmetallwand aufweisen, wobei zur ersten Seite hin die erste Metallplatte und die weitere erste Metallplatte angeordnet sind und zur zweiten Seite hin die zweite Metallplatte und die weitere zweite Metallplatte angeordnet sind, so dass insbesondere die erste Metallplatte gegenüber insbesondere spiegelbildlich gegenüber der zweiten Metallplatte angeordnet ist und derart, dass die weitere erste Metallplatte spiegelbildlich zur zweiten weiteren Metallplatte angeordnet ist. Der Raum zwischen jeweils der ersten Metallplatte und der zweiten Metallplatte bzw. der Raum zwischen der weiteren ersten Metallplatte und der weiteren zweiten Metallplatte kann durch Mineralwolle und/oder eine Trennlage und/oder anderes Material, welches insbesondere hitzebeständig und wärmeisolierend wirken kann, ausgefüllt werden, vollständig oder teilweise. Ferner können zwischen beiden Teilen der Metalldoppelwand ein oder mehrere weitere Balken eines Balkenwerkes vorhanden sein, welche jeweils an dem Rahmen montiert sind. Damit kann eine stabile Brandschottung erstellt werden.

Gemäß einer Ausführungsform der vorliegenden Erfindung ist die Stütze zum Tragen einer Masse von zwischen 2,5 kg und 600 kg, insbesondere zwischen 300 kg und 500 kg ausgelegt. Somit kann die Stütze ausreichende Stabilität aufweisen, um eine Hochspannungselektroleitung einer herkömmlich verwendeten Dimensionierung und eines herkömmlich verwendeten Gewichtes zu tragen, für den Fall, dass eine Verformung aufgrund von erhöhter Hitzeentwicklung auf der zweiten Seite der Wand droht oder wenn eine vorher vorhandene äußere Abstützung (z.B. auf der zweiten Seite) aufgrund von Beschädigung oder Zerstörung ausfällt.

Gemäß einer Ausführungsform der vorliegenden Erfindung ist die Stütze zu der ersten Seite hin gewandt (an welcher ein relativ geringes Brandrisiko erwartet ist), und wird insbesondere angrenzend an und/oder auf der ersten Metallplatte und/oder angrenzend an und/oder auf der weiteren ersten Metallplatte angebracht. Auf der ersten Seite der ersten Metallplatte und/oder der weiteren ersten Metallplatte ist erwartungsgemäß ein Brandrisiko geringer als auf der zweiten Seite der zweiten Metallplatte und der weiteren zweiten Metallplatte. Somit ist die Stütze, wenn sie zu der ersten Seite hingewandt ist, nicht dem hohen Brandrisiko ausgesetzt, welches auf der zweiten Seite der Wand herrscht. Somit kann die Stütze aufgrund der vorhandenen Brandschottung vor negativen Auswirkungen eines Brandes auf der zweiten Seite effektiv geschützt sein. Eine Verformung bzw. Beschädigung oder gar Zerstörung der Stütze kann aufgrund der Brandschottung somit verhindert bzw. zumindest vermindert sein.

Gemäß einer Ausführungsform der vorliegenden Erfindung ist die Stütze als T-Stütze mit einem vertikal verlaufenden Balken und einem horizontal verlaufenden Balken ausgebildet, wobei der vertikal verlaufende Balken unterhalb der Hochspannungselektroleitung, insbesondere mittig, und unterhalb des horizontal verlaufenden Balkens angebracht wird. Somit kann die Stütze in einfacher Weise mit konventionell erhältlichen Elementen aufgebaut werden. Die Abmessungen der verschiedenen die Stütze bildenden Balken können individuell auf die im Feld vorliegenden Konstellationen abgestimmt werden. Zum Beispiel können der horizontal verlaufende Balken und der vertikal verlaufende Balken zunächst miteinander verbunden werden und dann könnte die somit hergestellte Stütze an der Laibung der Wand befestigt werden. In anderen Ausführungsformen, wird zunächst z.B. ein Balken der Stütze, z.B. der vertikal verlaufende Balken oder der horizontal verlaufende Balken zunächst an der Laibung befestigt, dann kann der verbleibende Balken an der Laibung befestigt werden und zum Schluss können beide die Stütze bildenden Balken miteinander verbunden werden.

Gemäß einer Ausführungsform der vorliegenden Erfindung wird der vertikal verlaufende Balken an einem horizontal verlaufenden unteren Laibungsbereich und dem horizontal verlaufenden Balken verschraubt. Hiermit kann eine sichere Verbindung zwischen den beiden Balken sowie der Laibung erreicht werden. Die Balken können z.B. in der Laibung verdübelt werden.

Gemäß einer Ausführungsform der vorliegenden Erfindung wird der horizontal verlaufende Balken an zwei vertikal verlaufenden seitlichen Laibungsbereichen verschraubt. Wiederum können dazu Dübel verwendet werden, welche brand- und hitzebeständig sind.

Gemäß einer Ausführungsform der vorliegenden Erfindung hat der horizontal verlaufende und/oder der vertikal verlaufende Balken im Querschnitt eine Rechteckform oder eine T-Form oder eine L-Form. Andere Formen sind möglich. Damit können konventional erhältliche Balken Verwendung finden.

Gemäß einer Ausführungsform der vorliegenden Erfindung weist das Verfahren ferner auf Bilden eines Auflagers, insbesondere Sattelauflagers, zwischen der Hochspannungselektroleitung und der Stütze. In gewissen Ausführungsformen kann die Stütze derart ausgebildet sein, dass sie nach Montage an der Laibung mit einer oberen Kante im Wesentlichen in Kontakt ist bzw. nur gering beabstandet ist von einer unteren Kante der Hochspannungselektroleitung, so dass die Hochspannungselektroleitung sich direkt nach unten auf die Stütze abstützen kann. In anderen Ausführungsformen ist ein Zwischenraum zwischen der montierten Stütze und einer unteren Fläche der Hochspannungselektroleitung vorhanden. In diesem Falle kann das Auflager diese Lücke ausfüllen. Das Auflager kann sich dabei auf der Stütze abstützen und die Hochspannungselektroleitung kann sich auf dem Auflager, insbesondere einer Auflagefläche des Auflagers, welche z.B. als ein Sattel geformt sein kann, abstützen.

Gemäß einer Ausführungsform der vorliegenden Erfindung ist das Auflager aus Brandschutzmörtel, insbesondere faserverstärkt, gefertigt. Brandschutzmörtel kann z.B. nach Montage der Stütze auf den horizontal verlaufenden Balken der Stütze aufgebracht werden, um den Zwischenraum zwischen einer oberen Fläche bzw. Kante des horizontal verlaufenden Balkens und einer unteren Fläche der Hochspannungselektroleitung auszufüllen. Der Brandschutzmörtel kann auf Teilen einer Umfangsfläche der Hochspannungselektroleitung (z.B. einen Halbkreis einnehmend) aufgebracht werden und kann bis zu der oberen Kante der Stütze aufgefüllt werden. Ein ausgehärteter Brandschutzmörtel kann die vorbestimmte Last der Hochspannungselektroleitung aufnehmen und auf die Stütze übertragen.

Gemäß einer Ausführungsform der vorliegenden Erfindung werden die erste Aussparung in der ersten Metallplatte und die weitere erste Aussparung in der weiteren ersten Metallplatte im montierten Zustand, bis auf einen ersten Spalt mit einer Breite zwischen 10 mm und 100 mm, insbesondere zwischen 20 mm und 50 mm, ferner insbesondere etwa 30 mm, von der hindurchreichenden Hochspannungselektroleitung ausgefüllt.

Die erste Aussparung und die weitere erste Aussparung können zusammengenommen z.B. im Wesentlichen Kreisform bzw. Ellipsenform aufweisen. Damit kann z.B. auch eine gegenüber einer Horizontalen geneigte Hochspannungselektroleitung umgriffen werden. Wenn die erste Aussparung und die weitere erste Aussparung im Wesentlichen von der dadurch hindurchreichenden Hochspannungselektroleitung ausgefüllt werden, kann bereits eine relativ gute Abschottung gegen Brand und Rauch erreicht sein, da ein verbleibender Spalt leicht durch Füllmaterialien, wie Mörtel oder ähnliches abgedichtet bzw. ausgefüllt werden kann.

Auch auf der zweiten Seite kann die zweite Metallplatte bzw. die weitere zweite Metallplatte den Durchgang durch die Wandöffnung derart ausfüllen bzw. versperren, dass lediglich ein zweiter Spalt zwischen der Hochspannungselektroleitung und der zweiten Metallplatte bzw. der weiteren zweiten Metallplatte verbleibt. Auch dieser zweite Spalt kann durch entsprechendes geeignetes Füllmaterial, z.B. zwischen 3 mm und 5 mm, ausgefüllt und somit verschlossen werden.

Gemäß einer Ausführungsform der vorliegenden Erfindung weist das Verfahren ferner auf Abdecken zumindest eines Teils der ersten Metallplatte und eines Teils der weiteren ersten Metallplatte und des ersten Spaltes mittels einer kastenförmigen Abdeckung, die eine Öffnung für die Hochspannungselektroleitung aufweist.

Die Abdeckung kann eine weitere zusätzliche Rauchschottung bzw. Brandschottung in dem Bereich um die Hochspannungselektroleitung herum bereitstellen. Auch für den Fall, dass z.B. das in den ersten Spalt und/oder den zweiten Spalt eingeführte Füllmaterial aufgrund von Verformungen oder Verbiegungen verdrängt wird, kann durch die weitere kastenförmige Abdeckung trotzdem eine Rauchdichtigkeit aufrechterhalten werden.

Gemäß einer Ausführungsform der vorliegenden Erfindung ist die Abdeckung zumindest an der ersten Metallplatte und der weiteren ersten Metallplatte angebracht. Somit ist eine einfache Montage der Abdeckung ermöglicht. Die Abdeckung kann durch mehrere Metallplatten gebildet werden, die verbunden werden.

Gemäß einer Ausführungsform der vorliegenden Erfindung liegt ein unterer Rand der Abdeckung auf dem horizontalen Balken des Stützteils auf und/oder ist daran angebracht, insbesondere mittels mindestens eines Winkelelements. Damit kann eine zuverlässige Fixierung der Abdeckung erreicht werden.

Gemäß einer Ausführungsform der vorliegenden Erfindung weist das Verfahren ferner auf Füllen eines Raumes innerhalb der Abdeckung, insbesondere mit selbstaufschäumendem Material; und/oder Abdichten oder Versiegeln von Fugen. Das selbstaufschäumende Material kann ein Material umfassen, welches ab einer bestimmten Temperatur von selbst aufschäumt, um eine Abdichtung zu erreichen, falls Teile der Abdeckung bzw. der Elemente, welche mit der Abdeckung in Verbindung stehen, verformt werden.

Gemäß einer Ausführungsform der vorliegenden Erfindung weist das Verfahren ferner auf Montieren, insbesondere innerhalb des Rahmens, eines oder mehrerer, Horizontalbalkens und/oder Vertikalbalkens und/oder Verstrebung, insbesondere an nach innen hervorstehenden Winkeln, die an vertikal verlaufenden Rahmenelementen angebracht sind, um ein Balkenwerk zu bilden.

Das Balkenwerk kann ermöglichen oder erleichtern, die Wandöffnung durch mehr als die erste und die weitere erste Metallplatte abzudecken bzw. auszufüllen, wenn z.B. die Wandöffnung eine relativ große Ausdehnung hat. In einem solchen Fall kann es beschwerlich sein, die gesamte Wandöffnung durch nur zwei Platten auszufüllen, da die Metallplatten ein erhebliches Gewicht aufgrund der erhöhten Ausdehnung hätten. Das Balkenwerk kann einige horizontal und einige vertikal verlaufende Balken umfassen, welche miteinander und/oder mit dem ringförmig umlaufenden Rahmen verbunden sind. Damit ist eine erhöhte Flexibilität insbesondere für verschiedene Ausdehnungen von Wandöffnungen erreicht.

Gemäß einer Ausführungsform der vorliegenden Erfindung werden zum Abdecken des freien Durchgangs durch den Rahmen ein oder mehrere noch weitere erste Metallplatten an der ersten Stirnfläche und/oder an dem Balkenwerk und ein oder mehrere noch weitere zweite Metallplatten an der zweiten Stirnfläche des Rahmens und/oder an dem Balkenwerk befestigt.

Gemäß einer Ausführungsform der vorliegenden Erfindung weist die Hochspannungselektroleitung ein Außenrohr, insbesondere Komposit-Rohr; ein Innenrohr innerhalb des Außenrohrs; einen elektrischen Leiter innerhalb des Innenrohrs auf.

Gemäß einer Ausführungsform der vorliegenden Erfindung ist die Hochspannungselektroleitung für Hochspannung, insbesondere für eine Spannung zwischen 100 kV und 500 kV und/oder für einen Strom zwischen 1000 A und 3000 A ausgelegt, insbesondere für Drehstrom, und/oder wobei die Brandschottung einer Temperatur von zwischen 1000 °C und 1500 °C für mindestens 90 min. widersteht. Die Wand kann eine Außenwand eines Konvertergebäudes sein, wobei die Hochspannungselektroleitung von einem Transformator außerhalb des Konvertergebäudes in das Konvertergebäude hineinreicht.

Es sollte verstanden werden, dass Merkmale, welche individuell oder in irgendeiner Kombination im Zusammenhang mit einem Verfahren eines brandfesten Verschließens einer Wandöffnung in einer Wand (und somit eines Herstellens einer Brandschottung) genannt, beschrieben, erläutert oder bereitgestellt wurden, ebenso, individuell oder in irgendeiner Kombination für eine Vorrichtung zum brandfesten Verschließen einer Wandöffnung, insbesondere für eine Brandschottung, angewendet werden können gemäß Ausführungsformen der vorliegenden Erfindung und umgekehrt.

Gemäß einer Ausführungsform der vorliegenden Erfindung ist bereitgestellt eine Vorrichtung zum brandfesten Verschließen einer Wandöffnung, durch die eine Hochspannungselektroleitung geführt ist, insbesondere für den Fall eines Brandes auf einer zweiten Seite der Wand, wobei die Vorrichtung aufweist: einen Rahmen, der an einer Laibung der Wandöffnung montiert ist; mindestens eine erste Metallplatte mit einer ersten Aussparung für einen Teil der Hochspannungselektroleitung und mindestens eine weitere erste Metallplatte mit einer weiteren ersten Aussparung für einen weiteren Teil der Hochspannungselektroleitung, die auf einer ersten Stirnfläche des Rahmens, die insbesondere zu einer der zweiten Seite gegenüberliegenden ersten Seite der Wand hin gewandt ist, derart montiert sind, dass ein freier Durchgang durch den Rahmen im Wesentlichen abgedeckt ist; und eine Stütze für die Hochspannungselektroleitung, die an der Laibung montiert ist.

Die Laibung kann aus Beton gefertigt sein. Die Metallplatten können aus Stahl, insbesondere Dura-Steel gefertigt sein oder aufweisen.

### KURZE BESCHREIBUNG DER ZEICHNUNGEN

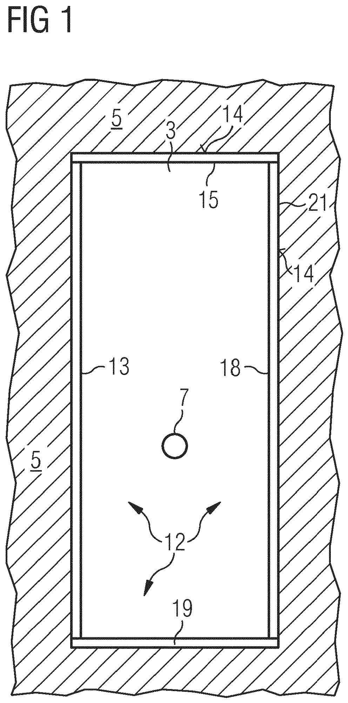

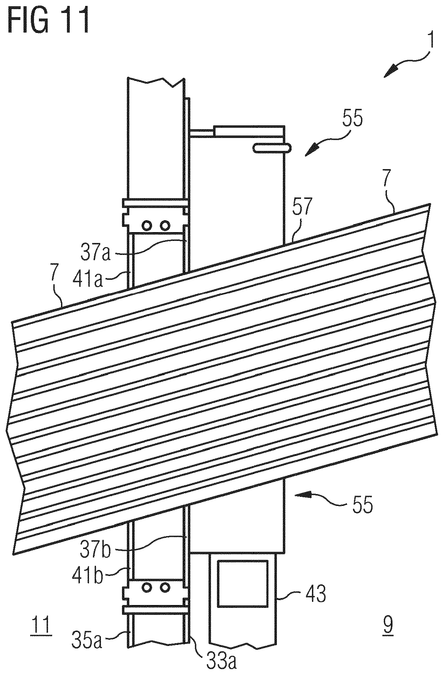

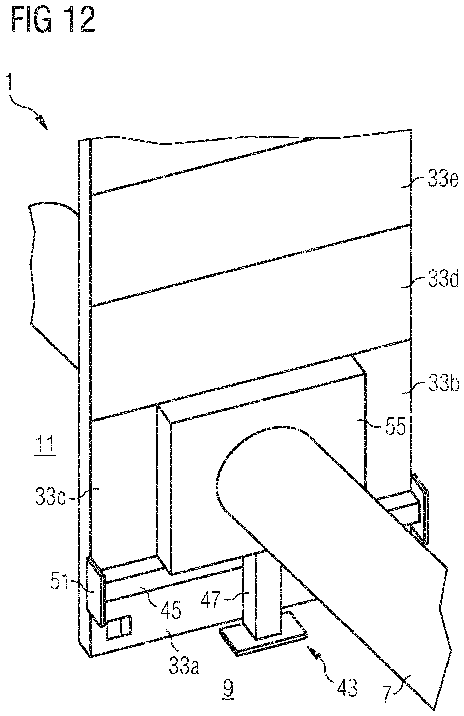

Fign. 1 bis 12 illustrieren verschiedene Zustände während eines Verfahrens zum Herstellen einer Brandschottung bzw. eines Verfahrens eines brandfesten Verschließens einer Wandöffnung in einer Wand, wobei durch die Wandöffnung eine Hochspannungselektroleitung geführt ist, gemäß Ausführungsformen der vorliegenden Erfindung, wobei die vollendete Vorrichtung zum brandfesten Verschließen einer Wandöffnung, durch die eine Hochspannungselektroleitung geführt ist, gemäß einer Ausführungsform der vorliegenden Erfindung in Fign. 11 und 12 illustriert ist.

### DETAILLIERTE BESCHREIBUNG EINER AUSFÜHRUNGSFORM

Eine Ausführungsform der vorliegenden Erfindung wird nun mit Bezug auf die beiliegenden Zeichnungen erläutert. Die Erfindung ist nicht auf die illustrierte oder beschriebene Ausführungsform beschränkt.

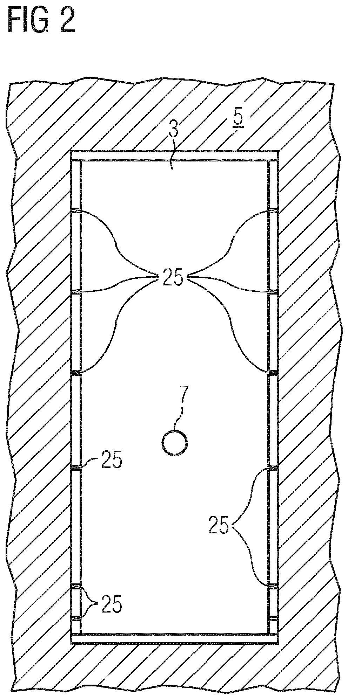

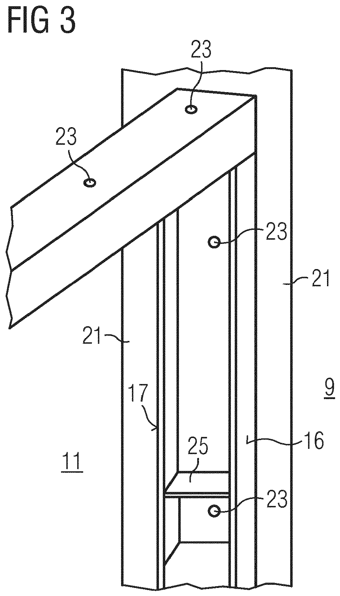

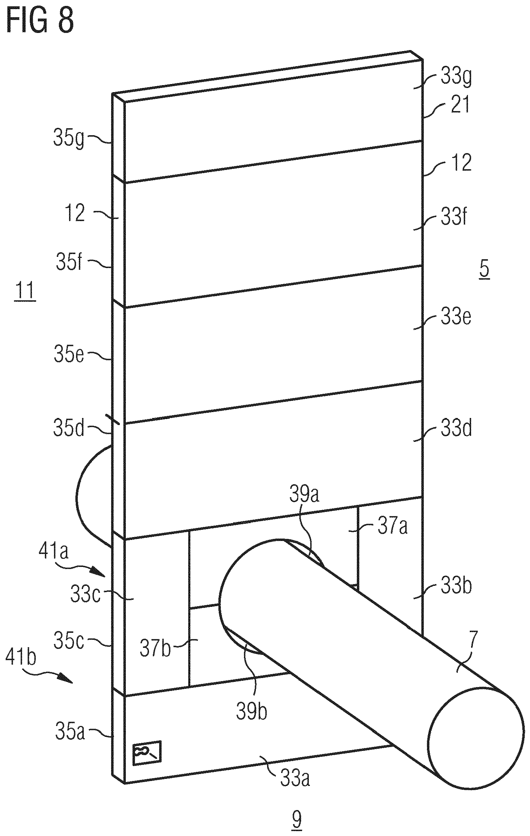

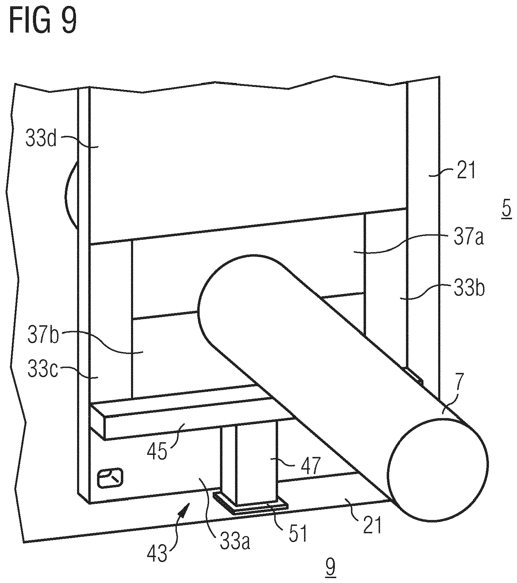

Fig. 1 illustriert in einer Seitenansicht einen ersten Verfahrensschritt eines Verfahrens eines brandfesten Verschließens einer Wandöffnung 3 in einer Wand 5, wobei durch die Wandöffnung 3 eine Hochspannungselektroleitung 7 geführt ist. Die Wand 5 kann insbesondere aus Beton gefertigt sein. Die Seitenansicht der Fig. 1 (und auch der Fign. 2, 4, 5, 6, 7) ist dabei von einer ersten Seite 9 (siehe Fig. 8 oder 9) der Wand her gesehen, wobei auf der zweiten Seite 11 der Wand, Brandgefahr in erhöhtem Maße droht. In dem in Fig. 1 illustrierten Verfahrensschritt wird ein Rahmen 12 aus Rahmenteilen 13, 15, 18, 19 an einer Laibung 21 der Wand 5 angebracht bzw. montiert. Der aus den Balken 13, 15, 17, 19 aufgebaute Rahmen (mit Bezugszeichen 12 bezeichnet) ist rechteckig und hat eine Ringform, umschließt somit die Wandöffnung 3 ringförmig. Zum Befestigen der einzelnen Rahmenteile umfassen diese Durchgangsöffnungen 23 (illustriert in Fig. 3), durch welche nicht illustrierte Schrauben geführt werden, welche in Dübel eingreifen, welche in der Laibung 21 eingebracht sind. Der Rahmen 12 wird somit mit seinen äußeren Kanten 14 mit der Laibung 21 verschraubt.

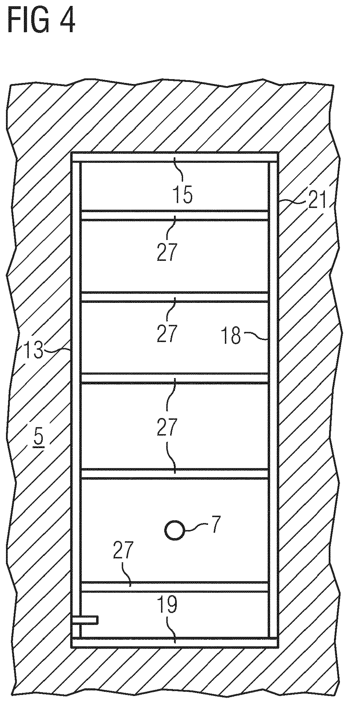

In gewissen vertikalen Positionen werden sodann Innenwinkel 25 (siehe auch Fig. 3) angebracht, welche somit nach innerhalb der Wandöffnung 3 zeigen, um zu ermöglichen, dass später, d.h. nach Montage des Rahmens 12, weitere Balken 27 in den Rahmen 12 eingesetzt werden können, wie in Fign. 4 und 5, sowie 6 illustriert ist. Je nach Größe der Wandöffnung 3 können ein oder mehrere horizontal ausgerichtete Balken 27 und ein oder mehrere vertikal ausgerichtete Balken 29 vorgesehen sein, um somit innerhalb des Rahmens 12 ein Balkenwerk oder Ständerwerk zu bilden. Das aus Balken 27, 29 gebildete Balkenwerk bzw. Ständerwerk ermöglicht später ein Anbringen, von der ersten Seite her und der zweiten Seite her, von ersten bzw. zweiten Metallplatten, um die Wandöffnung 3 zu verschließen.

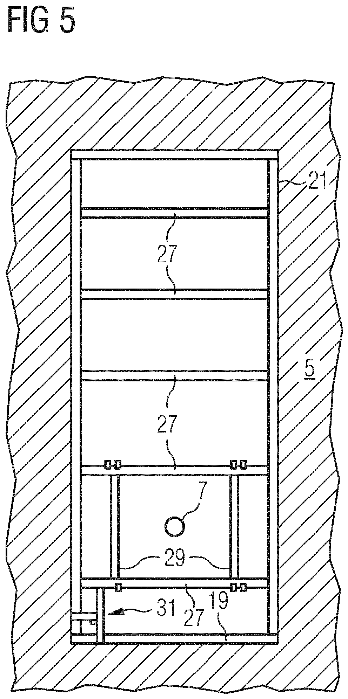

Optional ist, wie in Fig. 5 illustriert ist, in einem linken unteren Bereich eine Öffnung 31 für eine weitere Kabeldurchführung vorgesehen. Durch diese Öffnung 31 kann z.B. ein Steuer- bzw. Messkabel gelegt werden, welches z.B. mit einem Transformator verbunden ist bzw. mit Messsensoren des Transformators und/oder eines Konverters verbunden ist, um den jeweiligen Betriebszustand des Transformators bzw. des Konverters zu detektieren und an eine jeweils andere Komponente weiterzuleiten.

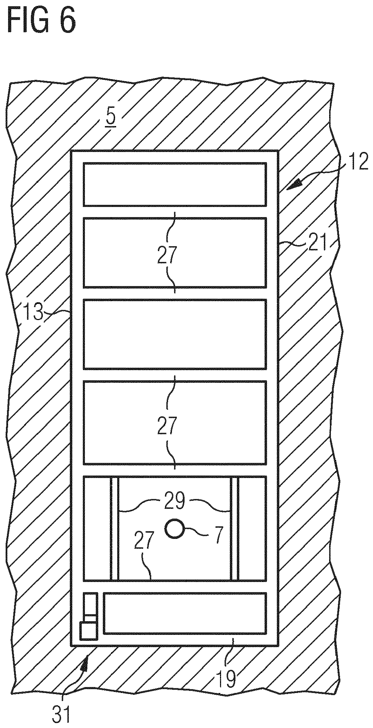

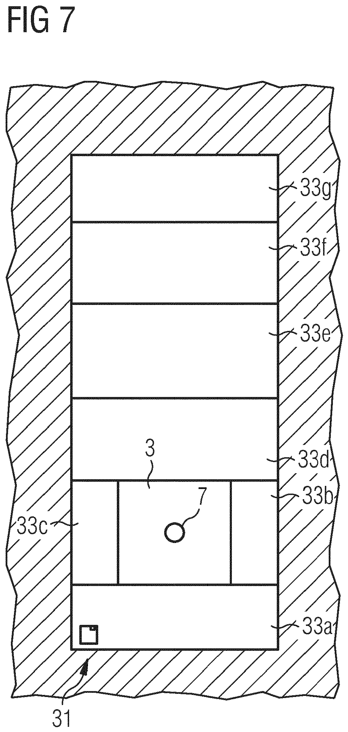

Das durch die horizontalen und vertikalen Balken 27, 29 gebildete Ständerwerk kann demontierbar und remontierbar ausgebildet sein, um den individuellen Anforderungen zu genügen. Nachdem das Ständerwerk wie in Fig. 6 in der Seitenansicht illustriert, vollendet ist, wird eine Trennlage auf das Ständerwerk aufgebracht und Mineralwolle in das Ständerwerk eingebracht. Danach erfolgt, wie in Fig. 7 illustriert ist, eine Installation von mehreren noch weiteren ersten Metallplatten 33a, ... 33g, die entsprechend den horizontalen Balken 27 und auch den vertikalen Balken 29 bemessen sind und damit verbunden sind.

Die noch weiteren ersten Metallplatten 33a, ... 33g sind alle auf einer ersten Stirnseite 16 des Rahmens 12 angebracht. Die erste Stirnseite 16 ist zu der ersten Seite 9 der Wand 5 hin gewandt (siehe z.B. Fig. 11 für die Bezeichnung der ersten Seite 9 und der zweiten Seite 11 der Wand 5). Nachdem die weiteren ersten Metallplatten 33a, ... 33g auf der ersten Stirnseite 16 des Rahmens 12 montiert worden sind, werden von der zweiten Stirnseite 17 (siehe Fig. 3), die der ersten Stirnseite 16 gegenüberliegt, noch weitere zweite Metallplatten 35a, ... 35g montiert, im Wesentlichen spiegelbildlich zu den noch weiteren ersten Metallplatten 33a, ... 33g, wie in Fig. 8 gezeigt ist. Um auch diese noch weiteren zweiten Metallplatten 35a, ... 35g illustrieren zu können, ist in der perspektivischen Ansicht der Fig. 8 die Wand weggelassen, wobei die Ansicht von der ersten Seite 9 her erfolgt.

In dem in der Fig. 8 illustrierten Verfahrensschritt wurden ferner eine erste Metallplatte 37a und eine weitere erste Metallplatte 37b auf dem Rahmen 12 oder auf dem Balkenwerk, welches durch horizontale Balken 27 und vertikale Balken 29 gebildet ist, montiert. Dabei weist die erste Metallplatte 37a eine erste, insbesondere im Wesentlichen halbkreisförmige Ausnehmung 39a auf und zwar für einen Teil der Hochspannungselektroleitung 7. Die weitere erste Metallplatte 37b weist eine weitere erste Aussparung 39b für einen weiteren Teil der Hochspannungselektroleitung 7 auf. In dem montierten Zustand, wie er in Fig. 8 illustriert ist, ist ein freier Durchgang durch den Rahmen 12 und somit ein Durchgang durch die Wandöffnung 3 im Wesentlichen durch die erste Metallplatte 37a, durch die weitere Metallplatte 37b und die noch weiteren ersten Metallplatten 35a, ... 35g im Wesentlichen ausgefüllt bzw. abgedeckt.

Spiegelbildlich zu der ersten Metallplatte 37a und auch spiegelbildlich zu der weiteren ersten Metallplatte 37b werden dann von der zweiten Seite 11 her eine zweite Metallplatte 41a und eine weitere zweite Metallplatte 41b an dem Balkenwerk bzw. an dem Rahmen montiert, wobei auch zwischen diesen Paaren von parallelen Metallplatten Mineralwolle oder anderes Füllmaterial eingefüllt ist. Es kann auch selbstschäumendes oder selbst aufschäumendes Material zwischen den parallelen Metallplatten vorgesehen und eingebracht werden.

Nachdem, wie in Fig. 8 illustriert ist, die erste Metallplatte 37a, die weitere erste Metallplatte 37b von der ersten Seite 9 her und die zweite Metallplatte 41a und die weitere zweite Metallplatte 41b von der zweiten Seite 11 her an dem Ständerwerk bzw. Balkenwerk innerhalb des Rahmens 12 angebracht worden sind, werden die Spalten 9, die zwischen der Hochspannungselektroleitung 7 und den Metallplatten verbleiben, durch Füllmaterial oder Mörtel abgedichtet.

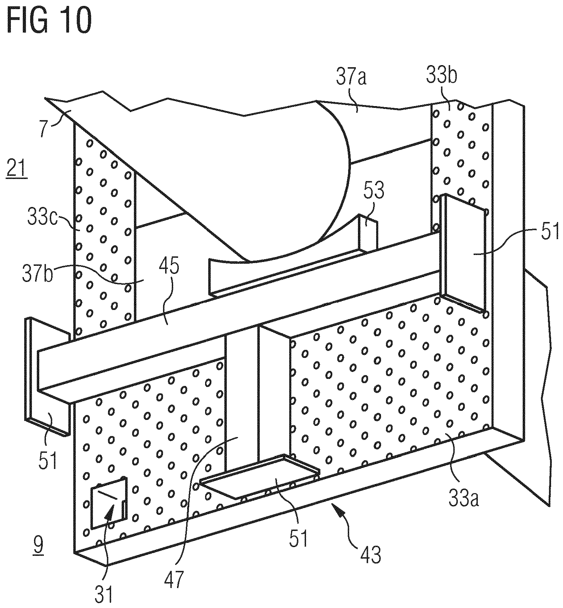

In dem in Fign. 9 und 10 illustrierten Verfahrensschritt wird ferner eine Stütze 43 für die Hochspannungselektroleitung 7 an der Laibung 21, welche nur schematisch illustriert ist, und in Fig. 10 teilweise weggelassen ist, montiert.

Wie in Fign. 9, 10, 11, 12 illustriert ist, ist die Stütze 43 auf der ersten Seite der Wand vorgesehen bzw. ist zu der ersten Seite 9 der Wand hingewandt. Die Stütze 43 kann auf einer der ersten Metallplatten 33a, ... 33g, 37a, 37b aufliegen oder davon beabstandet sein, wie z.B. aus Fig. 11 in einer Querschnittansicht der Brandschottung ersichtlich ist. Die Stütze 43 weist einen horizontal verlaufenden Balken 45 sowie einen vertikal verlaufenden Balken 47 auf, welche senkrecht aufeinander stehen und miteinander verbunden sind, z.B. verschweißt sind. Der vertikal verlaufende Balken 47 ist insbesondere mittig unterhalb der Hochspannungselektroleitung 7 angeordnet. Zum Befestigen des horizontalen Balkens 45 weist dieser an seinen horizontalen Enden jeweils Endplatten 51 auf, welche z.B. Durchgangslöcher aufweisen können, mittels derer der horizontale Balken 45 an vertikalen Laibungsbereichen verschraubt werden kann. Der vertikale Balken 47 weist ebenfalls eine Endplatte 51 auf, welche ebenfalls Durchgangslöcher aufweisen kann, so dass Schrauben durch diese hindurchgeführt und in Dübel eingeschraubt werden können, welche in die Laibung 21, insbesondere in einen horizontal unteren Laibungsbereich eingeschraubt werden können. Der horizontale Balken 45 sowie auch der vertikale Balken 47 weisen jeweils eine Rechteckform im Querschnitt auf.

In einem nächsten Verfahrensschritt wird ein Auflager 53 gebildet, wie es in Fig. 11 schematisch illustriert ist, und zwischen einem unteren Bereich der Hochspannungselektroleitung 7 und einer oberen Kante der Stütze 43 angeordnet, insbesondere oberhalb der oberen horizontalen Kante des horizontalen Balkens 45. Auf diesem Auflager 43 liegt die Hochspannungselektroleitung 7 auf, das Auflager 53 stützt sich dabei an der Stütze 43 vertikal nach unten ab.

In einem weiteren Verfahrensschritt, welcher in Fign. 11 und 12 illustriert ist, wird von der ersten Seite her zumindest die erste Metallplatte 37a und die weitere erste Metallplatte 37b durch eine Abdeckung 55, welche kastenförmig ist, abgedeckt, dabei weist die Abdeckung 55 eine Öffnung 57 für die Hochspannungselektroleitung 7 auf, wie z.B. in Fig. 11 illustriert ist. Wie weiter in Fig. 11 illustriert ist, welche eine Querschnittansicht in einer Richtung senkrecht zu der Erstreckungsrichtung des Elektrokabels zeigt, liegt die Abdeckung 55 auf der oberen Kante des horizontalen Balkens 45 der Stütze 43 auf. Die Abdeckung 55 kann z.B. durch mehrere Metallplatten gebildet sein, die eine entsprechende Aussparung für die Hochspannungselektroleitung aufweisen. Die Hochspannungselektroleitung 7 kann ein Außenrohr, ein Innenrohr innerhalb des Außenrohrs und einen elektrischen Leiter innerhalb des Innenrohrs aufweisen.

Die Abdeckung 45 wird auch als Schiebebrandschott bezeichnet. Die Trennlage kann PROMAGLAF-A, 2x3 mm aufweisen. Die Metallplatten sowie auch der Rahmen kann aus Durasteel gefertigt sein. Fugen können mit Brandschutzmörtel und/oder selbst aufschäumender Füllung oder einem anderen Füllmaterial gefüllt bzw. abgedichtet werden. Die Kabeldurchführung 31 kann am Ende des Herstellungsprozesses verschlossen werden. Dazu kann z.B. Mineralwolle oder Brandschutzstein oder selbst aufschäumender Schaum verwendet werden. Die Stütze 43 kann insbesondere als eine "T-Stütze" ausgeführt sein und mit zusätzlichem selbst-abdichtendem Schiebebrandschott innenseitig ausgeführt sein und kann im Falle eines Brandes auf der zweiten Seite (z.B. Transformator-Brand) die entstehende vertikal nach unten wirkende Kraft abstützen bzw. auffangen. Ferner kann ein seitliches Ausweichen verhindert sein. Das Brandschott außenseitig bietet den Brandschutz für die Stahlkonstruktion der T-Stütze, welche für die vorgenannte Kraft statisch bemessen wurde. Ferner ist das Schiebebrandschott (Abdeckung 55) ebenfalls vor dem Brand geschützt. Das Schiebebrandschott kann zusätzlich eine selbst-abdichtende Funktion (z.B. durch Aufschäumen) haben und enthält gleichzeitig das Sattelauflager 53 für die Hochspannungselektroleitung. Durch die Gewährleistung der Raumdichtheit kann auf entsprechende RWAs (=Rauch und Wärmeabzüge für den Brandfall) innerhalb einer Konverter-Halle verzichtet werden.

am Ende des Herstellungsprozesses verschlossen werden. Dazu kann z.B. Mineralwolle oder Brandschutzstein oder selbst aufschäumender Schaum verwendet werden. Die Stütze 43 kann insbesondere als eine "T-Stütze" ausgeführt sein und mit zusätzlichem selbst-abdichtendem Schiebebrandschott innenseitig ausgeführt sein und kann im Falle eines Brandes auf der zweiten Seite (z.B. Transformator-Brand) die entstehende vertikal nach unten wirkende Kraft abstützen bzw. auffangen. Ferner kann ein seitliches Ausweichen verhindert sein. Das Brandschott außenseitig bietet den Brandschutz für die Stahlkonstruktion der T-Stütze, welche für die vorgenannte Kraft statisch bemessen wurde. Ferner ist das Schiebebrandschott (Abdeckung 55) ebenfalls vor dem Brand geschützt. Das Schiebebrandschott kann zusätzlich eine selbst-abdichtende Funktion (z.B. durch Aufschäumen) haben und enthält gleichzeitig das Sattelauflager 53 für die Hochspannungselektroleitung. Durch die Gewährleistung der Raumdichtheit kann auf entsprechende RWAs (=Rauch und Wärmeabzüge für den Brandfall)innerhalb einer Konverter-Halle verzichtet werden.

## Patentansprüche

1. Verfahren eines brandfesten Verschließens einer Wandöffnung (3) in einer Wand (5), durch welche Wandöffnung eine Hochspannungselektroleitung (7) geführt ist, insbesondere für den Fall eines Brandes auf einer zweiten Seite (11) der Wand, wobei das Verfahren aufweist:
Montieren eines, insbesondere rechteckigen, Rahmens (12) an einer Laibung (21) der Wand (5);
Montieren mindestens einer ersten Metallplatte (37a) mit einer ersten Aussparung (39a) für einen Teil der Hochspannungselektroleitung (7) und Montieren mindestens einer weiteren ersten Metallplatte (37b) mit einer weiteren ersten Aussparung (39b) für einen weiteren Teil der Hochspannungselektroleitung (7) auf einer ersten Stirnfläche (16) des Rahmens (12), die insbesondere zu einer der zweiten Seite (11) gegenüberliegenden ersten Seite (9) der Wand (5) hin gewandt ist, derart, dass ein freier Durchgang durch den Rahmen (12) im Wesentlichen abgedeckt ist; und
Montieren einer Stütze (43) für die Hochspannungselektroleitung (7) an der Laibung (21).

2. Verfahren gemäß dem vorangehenden Anspruch, ferner aufweisend:
Einbringen von Mineralwolle in den Rahmen (12) in Kontakt mit der ersten Metallplatte (37a) und der weiteren ersten Metallplatte (37b); und/oder
Aufbringen einer Trennlage auf den Rahmen (12) und/oder die erste Metallplatte und/oder die weitere erste Metallplatte.

3. Verfahren gemäß einem der vorangehenden Ansprüche, ferner aufweisend:
Montieren mindestens einer zweiten Metallplatte (41a), insbesondere spiegelbildlich zur ersten Metallplatte (37a), mit einer zweiten Aussparung, und Montieren mindestens einer weiteren zweiten Metallplatte (41b), insbesondere spiegelbildlich zur weiteren ersten Metallplatte (37b), mit einer weiteren zweiten Aussparung auf einer zweiten Stirnfläche (17) des Rahmens (12), die insbesondere zu der zweiten Seite (11) der Wand (5) hin gewandt ist.

4. Verfahren gemäß einem der vorangehenden Ansprüche, wobei die Stütze (43) zum Tragen einer Masse von zwischen 200 kg und 600 kg, insbesondere zwischen 300 kg und 500 kg, ausgelegt ist.

5. Verfahren gemäß einem der vorangehenden Ansprüche,
wobei die Stütze (43) zu der ersten Seite (9) hin gewandt, insbesondere angrenzend an oder beabstandet von und/oder auf der ersten Metallplatte (37a) und/oder angrenzend an oder beabstandet und/oder auf der weiteren ersten Metallplatte (37b) angebracht wird.

6. Verfahren gemäß einem der vorangehenden Ansprüche, wobei die Stütze (43) als T-Stütze mit einem vertikal verlaufenden Balken (47) und einem horizontal verlaufenden Balken (45) ausgebildet ist, wobei der vertikal verlaufende Balken (47) unterhalb der Hochspannungselektroleitung (7), insbesondere mittig, und unterhalb des horizontal verlaufenden Balkens (45) angebracht wird.

7. Verfahren gemäß dem vorangehenden Anspruch, wobei der vertikal verlaufende Balken (47) an einem horizontal verlaufenden unteren Laibungsbereich (21) verschraubt wird und dem horizontal verlaufenden Balken (45) verschraubt wird oder verschweißt ist.

8. Verfahren gemäß einem der zwei vorangehenden Ansprüche, wobei der horizontal verlaufende Balken (45) an zwei vertikal verlaufenden seitlichen Laibungsbereichen (21) verschraubt wird.

9. Verfahren gemäß einem der drei vorangehenden Ansprüche, wobei der horizontal verlaufende und/oder der vertikal verlaufende Balken im Querschnitt eine Rechteckform oder T-Form oder L-Form hat.

10. Verfahren gemäß einem der vorangehenden Ansprüche, ferner aufweisend:
Bilden eines Auflagers (53), insbesondere Sattelauflagers, zwischen der Hochspannungselektroleitung (7) und der Stütze (43).

11. Verfahren gemäß dem vorangehenden Anspruch, wobei das Auflager (53) aus Brandschutzmörtel, insbesondere faserverstärkt, gefertigt wird.

12. Verfahren gemäß einem der vorangehenden Ansprüche, wobei die erste Aussparung in der ersten Metallplatte (37a) und die weitere erste Aussparung in der weiteren ersten Metallplatte (37b) im montierten Zustand, bis auf einen ersten Spalt mit einer Breite zwischen 10 mm und 100 mm, insbesondere zwischen 20 mm und 50 mm, von der hindurchreichenden Hochspannungselektroleitung ausgefüllt werden.

13. Verfahren gemäß einem der vorangehenden Ansprüche, ferner aufweisend:
Rauchfestes Verschließen des ersten Spaltes mittels Mineralwolle und/oder Brandschutzmörtels und/oder selbstaufschäumenden Materials.

14. Verfahren gemäß einem der vorangehenden Ansprüche, ferner aufweisend:
Abdecken zumindest eines Teils der ersten Metallplatte und eines Teils der weiteren ersten Metallplatte und des ersten Spaltes mittels einer kastenförmigen Abdeckung (55), die eine Öffnung für die Hochspannungselektroleitung (7) aufweist.

15. Verfahren gemäß dem vorangehenden Anspruch, wobei die Abdeckung zumindest an der ersten Metallplatte (37a) und der weiteren ersten Metallplatte (37b) angebracht ist.

16. Verfahren gemäß einem der zwei vorangehenden Ansprüche, wobei ein unterer Rand der Abdeckung (55) auf dem horizontalen Balken (45) der Stütze aufliegt und/oder daran angebracht ist, insbesondere mittels mindestens eines Winkelelements.

17. Verfahren gemäß einem der vorangehenden Ansprüche, ferner aufweisend:
Füllen eines Raumes innerhalb der Abdeckung (55), insbesondere mit selbstaufschäumendem Material; und/oder
Abdichten oder Versiegeln von Fugen.

18. Verfahren gemäß einem der vorangehenden Ansprüche, ferner aufweisend:
Montieren, insbesondere innerhalb des Rahmens, eines oder mehrerer, Horizontalbalkens (27) und/oder Vertikalbalkens (29) und/oder Verstrebung, insbesondere an nach innen hervorstehenden Winkeln, die an vertikal verlaufenden Rahmenelementen angebracht sind, um ein Balkenwerk zu bilden.

19. Verfahren gemäß einem der vorangehenden Ansprüche, wobei zum Abdecken des freien Durchgangs durch den Rahmen (12) ein oder mehrere noch weitere erste Metallplatten (33a,...,33g) an der ersten Stirnfläche (16) und/oder an dem Balkenwerk und ein oder mehrere noch weitere zweite Metallplatten (35a,...,35g) an der zweiten Stirnfläche (17) des Rahmens und/oder an dem Balkenwerk befestigt werden.

20. Verfahren gemäß einem der vorangehenden Ansprüche, wobei die Hochspannungselektroleitung (7) aufweist:
ein Außenrohr, insbesondere Komposit-Rohr;
ein Innenrohr innerhalb des Außenrohrs;
einen elektrischen Leiter innerhalb des Innenrohrs.

21. Verfahren gemäß einem der vorangehenden Ansprüche,
wobei die Hochspannungselektroleitung (7) für Hochspannung, insbesondere für eine Spannung zwischen 100 kV und 500 kV und/oder für einen Strom zwischen 1000 A und 3000 A ausgelegt ist, insbesondere für Drehstrom, und/oder
wobei die Brandschottung (1) einer Temperatur von zwischen 1000 °C und 1500 °C für mindestens 90 min. widersteht.

22. Verfahren gemäß einem der vorangehenden Ansprüche, wobei die Wand (5) eine Außenwand eines Konvertergebäudes ist, wobei die Hochspannungselektroleitung von einem Transformator außerhalb des Konvertergebäudes in das Konvertergebäude hinein reicht.

23. Vorrichtung (1) zum brandfesten Verschließen einer Wandöffnung (3), durch die eine Hochspannungselektroleitung (7) geführt ist, insbesondere für den Fall eines Brandes auf einer zweiten Seite (11) der Wand (5), wobei die Vorrichtung aufweist:
einen Rahmen (12), der an einer Laibung (21) der Wand (5) montiert ist;
mindestens eine erste Metallplatte (37a) mit einer ersten Aussparung (39a) für einen Teil der Hochspannungselektroleitung (7) und mindestens eine weitere erste Metallplatte (37b) mit einer weiteren ersten Aussparung (39b) für einen weiteren Teil der Hochspannungselektroleitung (7), die auf einer ersten Stirnfläche (16) des Rahmens (12), die insbesondere zu einer der zweiten Seite (11) gegenüberliegenden ersten Seite (9) der Wand (5) hin gewandt ist, derart montiert sind, dass ein freier Durchgang durch den Rahmen (12) im Wesentlichen abgedeckt ist; **dadurch gekennzeichnet, dass**
eine Stütze (43) für die Hochspannungselektroleitung (7), die an der Laibung (21) montiert ist.

## Claims

1. Method for closing a wall opening (3) in a wall (5) in a fire-proof manner, through which wall opening a high-voltage electric line (7) is led, in particular for the case of a fire on a second side (11) of the wall, wherein the method includes:
mounting an in particular rectangular frame (12) on a reveal (21) in the wall (5);
mounting at least one first metal plate (37a) having a first cut-out (39a) for part of the high-voltage electric line (7) and mounting at least one further first metal plate (37b) having a further first cut-out (39b) for a further part of the high-voltage electric line (7), on a first front face (16) of the frame (12), which in particular faces a first side (9) of the wall (5) that is opposite the second side (11), in such a way that a free passage through the frame (12) is substantially covered; and
mounting a support (43) for the high-voltage electric line (7) on the reveal (21).

2. Method according to the preceding claim, further including:
introducing mineral wool into the frame (12) in contact with the first metal plate (37a) and the further first metal plate (37b); and/or
applying a separating layer to the frame (12) and/or the first metal plate and/or the further first metal plate.

3. Method according to one of the preceding claims, further including:
mounting at least one second metal plate (41a), in particular in mirror-image fashion relative to the first metal plate (37a), having a second cut-out, and mounting at least one further second metal plate (41b), in particular in mirror-image fashion relative to the further first metal plate (37b), having a further second cut-out, on a second front face (17) of the frame (12), which in particular faces the second side (11) of the wall (5).

4. Method according to one of the preceding claims, wherein the support (43) is designed to support a mass of between 200 kg and 600 kg, in particular between 300 kg and 500 kg.

5. Method according to one of the preceding claims, wherein the support (43) is attached facing towards the first side (9), in particular adjacent to or at a distance from and/or on the first metal plate (37a) and/or adjacent to or at a distance from and/or on the further first metal plate (37b).

6. Method according to one of the preceding claims, wherein the support (43) is designed as a T-shaped support with a vertically extending beam (47) and a horizontally extending beam (45), wherein the vertically extending beam (47) is attached underneath the high-voltage electric line (7), in particular centrally, and underneath the horizontally extending beam (45).

7. Method according to the preceding claim, wherein the vertically extending beam (47) is screwed to a horizontally extending lower reveal area (21) and is screwed or welded to the horizontally extending beam (45).

8. Method according to one of the two preceding claims, wherein the horizontally extending beam (45) is screwed to two vertically extending lateral reveal areas (21).

9. Method according to one of the three preceding claims, wherein the horizontally extending and/or the vertically extending beam has a rectangular shape or a T shape or L shape in cross section.

10. Method according to one of the preceding claims, further including:
forming a seat (53), in particular a saddle seat, between the high-voltage electric line (7) and the support (43).

11. Method according to the preceding claim, wherein the seat (53) is made of fire protection mortar, in particular fibre-reinforced.

12. Method according to one of the preceding claims, wherein in the mounted state, the first cut-out in the first metal plate (37a) and the further first cut-out in the further first metal plate (37b) are filled by the high-voltage electric line passing through, apart from a first gap having a width between 10 mm and 100 mm, in particular between 20 mm and 50 mm.

13. Method according to one of the preceding claims, further including:
closing the first gap in a smoke-proof manner by means of mineral wool and/or fire protection mortar and/or self-foaming material.

14. Method according to one of the preceding claims, further including:
covering at least part of the first metal plate and part of the further first metal plate and the first gap by means of a box-shaped cover (55), which has an opening for the high-voltage electric line (7).

15. Method according to the preceding claim, wherein the cover is attached at least to the first metal plate (37a) and the further first metal plate (37b).

16. Method according to one of the two preceding claims, wherein a lower edge of the cover (55) rests on the horizontal beam (45) of the support and/or is attached thereto, in particular by means of at least one angle element.

17. Method according to one of the preceding claims, further including:
filling a space within the cover (55), in particular with self-foaming material; and/or
sealing off or sealing joints.

18. Method according to one of the preceding claims, further including:
mounting one or more horizontal beams (27) and/or vertical beams (29) and/or struts, in particular within the frame, in particular to angles that project inwards and are attached to vertically extending frame elements, in order to form a beam structure.

19. Method according to one of the preceding claims, wherein in order to cover the free passage through the frame (12), one or more still further first metal plates (33a, ..., 33g) are fastened to the first front face (16) and/or to the beam structure, and one or more still further second metal plates (35a, ..., 35g) are fastened to the second front face (17) of the frame and/or to the beam structure.

20. Method according to one of the preceding claims, wherein the high-voltage electric line (7) has:
an outer tube, in particular a composite tube;
an inner tube within the outer tube;
an electric conductor within the inner tube.

21. Method according to one of the preceding claims,
wherein the high-voltage electric line (7) is designed for a high voltage, in particular for a voltage between 100 kV and 500 kV and/or for a current between 1000 A and 3000 A, in particular for three-phase power, and/or
wherein the fire bulkhead (1) withstands a temperature of between 1000°C and 1500°C for at least 90 minutes.

22. Method according to one of the preceding claims, wherein the wall (5) is an outer wall of a converter building, wherein the high-voltage electric line reaches from a transformer outside the converter building into the converter building.

23. Device (1) for closing a wall opening (3) in a fire-proof manner, through which a high-voltage electric line (7) is led, in particular for the case of a fire on a second side (11) of the wall (5), wherein the device has:
a frame (12) which is mounted on a reveal (21) in the wall (5) ;
at least one first metal plate (37a) having a first cut-out (39a) for part of the high-voltage electric line (7) and at least one further first metal plate (37b) having a further first cut-out (39b) for a further part of the high-voltage electric line (7), which are mounted on a first front face (16) of the frame (12), which in particular faces a first side (9) of the wall (5) that is opposite the second side (11), in such a way that a free passage through the frame (12) is substantially covered; **characterized by**
a support (43) for the high-voltage electric line (7), which is mounted on the reveal (21).

## Revendications

1. Procédé de fermeture à l'épreuve de l'incendie d'un trou (3) dans une paroi (5), dans lequel le trou passe une ligne (7) électrique en haute tension, en particulier dans le cas d'un incendie sur une deuxième face (11) de la paroi, dans lequel le procédé comporte :
le montage d'un cadre (12), en particulier rectangulaire, sur une embrasure (21) de la paroi (5) ;
le montage d'au moins une première plaque (37a) métallique ayant un premier évidement (39a) pour une partie de la ligne (7) électrique en haute tension et le montage d'au moins une autre première plaque (37b) métallique ayant un autre premier évidement (39b) pour une autre partie de ligne (7) électrique en haute tension sur une première surface (16) frontale du cadre (12), qui est tournée, en particulier vers une première face (9) de la paroi (5) opposée à la deuxième face (11), de manière à ce qu'un passage libre dans le cadre (12) soit sensiblement recouvert ; et
le montage d'un étai (43) pour la ligne (7) électrique en haute tension sur l'embrasure (21).

2. Procédé suivant la revendication précédente, comportant en outre :
l'introduction de laine minérale dans le cadre (12) en contact avec la première plaque (37a) métallique et l'autre première plaque (37b) métallique ; et/ou
le dépôt d'une couche de séparation sur le cadre (12) et/ou sur la première plaque métallique et/ou sur l'autre première plaque métallique.

3. Procédé suivant l'une des revendications précédentes, comportant en outre :
le montage d'au moins une deuxième plaque (41a) métallique, en particulier symétriquement à la première plaque (37a) métallique, ayant un deuxième évidement, et le montage d'au moins une autre deuxième plaque (41b) métallique, en particulier symétriquement à l'autre première plaque (37b) métallique, ayant un autre deuxième évidement, sur une deuxième surface (17) frontale du cadre (12), qui est tournée, en particulier vers la deuxième face (11) de la paroi (5).

4. Procédé suivant l'une des revendications précédentes, dans lequel l'étai (43) est conçu pour supporter une masse comprise entre 200 kg et 600 kg, en particulier entre 300 kg et 500 kg.

5. Procédé suivant l'une des revendications précédentes, dans lequel l'étai (43) est tourné vers la première face (9), en en étant voisin de la première plaque (37a) métallique ou en en étant à distance et/ou en étant sur la première plaque (37a) métallique et/ou en étant voisin de l'autre première plaque (37b) métallique et/ou en en étant à distance et/ou en étant sur l'autre première plaque (37b) métallique.

6. Procédé suivant l'une des revendications précédentes, dans lequel l'étai (43) est constitué sous la forme d'un étai en T ayant une poutre (47) s'étendant verticalement et une poutre (45) s'étendant horizontalement, dans lequel la poutre (47) s'étendant verticalement est disposée en dessous de la ligne (7) électrique en haute tension, en particulier au milieu et en dessous de la poutre (45) s'étendant horizontalement.

7. Procédé suivant la revendication précédente, dans lequel on visse la poutre (47) s'étendant verticalement à une partie (21) d'embrasure inférieure s'étendant horizontalement et on la visse ou on la soude à la poutre (45) s'étendant horizontalement.

8. Procédé suivant l'une des deux revendications précédentes, dans lequel on visse la poutre (45) s'étendant horizontalement à deux parties (21) latérales d'embrasure s'étendant verticalement.

9. Procédé suivant l'une des trois revendications précédentes, dans lequel la poutre s'étendant horizontalement et/ou s'étendant verticalement a, en section transversale, une forme rectangulaire ou une forme en T ou une forme en L.

10. Procédé suivant l'une des revendications précédentes, comportant en outre :
la formation d'un support (53), en particulier d'un support en étrier, entre la ligne (7) électrique en haute tension et l'étai (43) .

11. Procédé suivant la revendication précédente, dans lequel on fabrique le support (53) en mortier ignifuge, en particulier renforcé par de la fibre.

12. Procédé suivant l'une des revendications précédentes, dans lequel on remplit le premier évidement de la première plaque (37a) métallique et l'autre premier évidement de l'autre première plaque (37b) à l'état monté, à l'exception d'une première fente, d'une largeur comprise entre 10 mm et 100 mm, en particulier entre 20 mm et 50 mm, de la ligne électrique en haute tension, qui y passe.

13. Procédé suivant l'une des revendications précédentes, comportant en outre :
la fermeture étanche à la fumée de la première fente au moyen de laine minérale et/ou de mortier ignifuge et/ou de matériau moussant de soi même.

14. Procédé suivant l'une des revendications précédentes, comportant en outre :
le recouvrement d'au moins d'une partie de la première plaque métallique et d'une partie de l'autre première plaque métallique et de la première fente au moyen d'un recouvrement (55) en forme de caisson, qui a une ouverture pour la ligne (7) électrique en haute tension.

15. Procédé suivant la revendication précédente, dans lequel le recouvrement est mis au moins sur la première plaque (37a) métallique et sur l'autre première plaque (37b) métallique.

16. Procédé suivant l'une des deux revendications précédentes, dans lequel un bord inférieur du recouvrement (55) s'applique à la poutre (45) horizontale de l'étai et/ou y est monté, en particulier au moyen d'une cornière.

17. Procédé suivant l'une des revendications précédentes, comportant en outre :
le remplissage d'un espace au sein du recouvrement (55), en particulier de matériau moussant de soi même ; et/ou
la mise en étanchéité ou le scellement de joints.

18. Procédé suivant l'une des revendications précédentes, comportant en outre :
le montage, en particulier à l'intérieur du cadre, d'une ou plusieurs poutres (27) horizontales et/ou poutres (29) verticales et/ou contrefiches, en particulier de cornières en saillie vers l'intérieur, qui sont montées sur des éléments de cadre s'étendant verticalement pour former une poutrerie.

19. Procédé suivant l'une des revendications précédentes, dans lequel, pour le recouvrement du passage libre dans le cadre (12), on fixe une ou plusieurs encore autres premières plaques (33a, ..., 33g) métalliques à la première surface (16) frontale et/ou à la poutrerie et une ou plusieurs encore autres deuxièmes plaques (35a, ..., 35g) métalliques à la deuxième surface (17) frontale du cadre et/ou à la poutrerie.

20. Procédé suivant l'une des revendications précédentes, dans lequel la ligne (7) électrique en haute tension comporte :
un tube extérieur, en particulier un tube composite ;
un tube intérieur à l'intérieur du tube extérieur ;
un conducteur électrique à l'intérieur du tube intérieur.

21. Procédé suivant l'une des revendications précédentes,
dans lequel la ligne (7) électrique en haute tension est conçue pour de la haute tension, en particulier pour une tension comprise entre 100 kV et 500 kV et/ou pour un courant compris entre 1000 A et 3000 A, en particulier pour du courant triphasé, et/ou
dans lequel le coupe-feu (1) résiste à une température comprise entre 1000°C et 1500°C pendant au moins 90 min.

22. Procédé suivant l'une des revendications précédentes, dans lequel la paroi (5) est une paroi extérieure d'un bâtiment de convertisseur, dans lequel la ligne électrique en haute tension va d'un transformateur à l'extérieur du bâtiment de convertisseur au bâtiment de convertisseur.

23. Installation (1) pour la fermeture à l'épreuve de l'incendie d'une ouverture (3) dans une paroi (5), dans lequel le trou passe une ligne (7) électrique en haute tension, en particulier dans le cas d'un incendie sur une deuxième face (11) de la paroi, dans lequel l'installation comporte :
un cadre (12), qui est monté sur une embrasure (21) de la paroi (5) ;
au moins une première plaque (37a) métallique ayant un premier évidement (39a) pour une partie de la ligne (7) électrique en haute tension d'au moins une autre première plaque (37b) métallique ayant un autre premier évidement (39b) pour une autre partie de la ligne (7) électrique en haute tension, qui sont montées sur une première surface (16) frontale du cadre (12), qui est tournée, en particulier vers une première face (9) de la paroi (5) opposée à la deuxième face (11), de manière à ce qu'un passage libre dans le cadre (12) soit sensiblement recouvert ; **caractérisée par** un étai (43) pour la ligne (7) électrique en haute tension, qui est montée sur l'embrasure (21).
